(19) **Europäisches Patentamt**

**European Patent Office**

**Office européen des brevets**

(11) **EP 1 273 337 A1**

(12) **EUROPEAN PATENT APPLICATION**

(43) Date of publication:
**08.01.2003 Bulletin 2003/02**

(51) Int Cl.$^7$: **B01D 53/94**, F01N 3/08

(21) Application number: **02012811.2**

(22) Date of filing: **10.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Balland, Jean**<br>**57000 Metz (FR)** |
| (30) Priority: **27.06.2001 LU 90795** | (74) Representative: **Kihn, Pierre Emile Joseph et al**<br>**Office Ernest T. Freylinger S.A.**<br>**B.P. 48**<br>**8001 Strassen (LU)** |
| (71) Applicant: **Delphi Technologies, Inc.**<br>**Troy, MI 48007 (US)** | |

(54) **NOx release index**

(57)   Method of monitoring the adsorptive capacity of a NO$_X$ adsorber of an internal combustion engine, comprising the following steps:

1) identification of O$_2$ moles released from the adsorber during rich pulse regeneration,
2) calculation of NO$_2$ moles released during rich pulse regeneration using the value from step 1 in a release model based on lambda deviation across the adsorber and the release chemistry of NO$_2$ from said adsorber

3) optional storage of successive results of steps 1 and 2
4) use of the results of step 2 and/or 3 to update an adaptative capacity model to control the duration of the lean phase and/or of the rich pulse.

EP 1 273 337 A1

## EP 1 273 337 A1

**Description**

This invention relates to a method and a system for monitoring the adsorptive capacity of $NO_x$ adsorber devices of internal combustion engines.

$NO_x$ adsorber devices are currently used to address one of the drawbacks of lean burn engines, namely difficulty to reduce initrogen oxides ($NO_x$) in a lean environment. NOx adsorber technology typically uses alkali or alkali-earth metals in order to temporarily store $NO_x$ under lean operating conditions and to release the $NO_x$ during periodic and relatively short rich pulses.

The mechanism for $NO_x$ storage involves the oxidation of NO to $NO_2$ followed by the subsequent formation of a nitrate complex with alkaline or alkaline earth metals. Under stoichiometric or rich conditions, the nitrate complexes are thermodynamically unstable and the stored $NO_x$ is released and catalytically reduced to nitrogen by the excess of CO, $H_2$, and hydrocarbon compounds in the exhaust gases.

The storage capacity of such an $NO_x$ adsorber degrades over time due to thermal ageing, but mainly due to sulfur poisoning, with resultant increase in atmospheric pollution and fuel consumption. The same alkali and alkali-earth metals that can store $NO_x$ under lean conditions are also excellent scavengers for $SO_2$ and $SO_3$ under these same conditions. The resulting sulfates are very stable and result in rapid deactivation of the $NO_x$ adsorber. Unfortunately, the levels of sulfur in gasoline are usually quite high and very variable, the average being about 50 to 300 parts per million (ppm). To purge the sulfur, frequent periods of extended hot, rich operation, so called desulfation processes, may thus be required with the known effects on overall fuel consumption.

Current diagnostic methods and systems are based on semi-empirical models to estimate the actual performance of an adsorber and thus to control the duration of lean and/or rich operating conditions, to identify sulfur poisoning and to trigger a desulfation process to regenerate the adsorber. To get a sufficient level of accuracy, these models need to be carefully calibrated and are generally acceptable or valid only for steady operation or a relatively small range of operating conditions. They are therefore less appropriate for automobile engines which are operating under very fluctuating conditions of temperature, load, fuel characteristics, etc.

Accordingly, it is desirable to provide a method that allows a better NOx adsorber diagnostic indicating the actually available $NO_x$ storage capacity at any time without the drawbacks described above.

The present invention provides in accordance to a first aspect of the present invention a method of monitoring the adsorptive capacity of a $NO_x$ adsorber of an internal combustion engine, comprising the following steps:

1) identification of $O_2$ moles released from the adsorber during rich pulse regeneration,
2) calculation of $NO_2$ moles released during rich pulse regeneration using the value from step 1 in a release model based on lambda deviation across the adsorber and the release chemistry of $NO_2$ from said adsorber
3) optional storage of successive results of steps 1 and 2
4) use of the results of step 2 and/or 3 to update an adaptative capacity model to control the duration of the lean phase and/or of the rich pulse.

By estimating the quantity of $NO_x$ stored during the previous lean period, it is possible to calculate an average storage capacity or efficiency of the $NO_x$ adsorber in order to maximise the fuel economy and to minimise tailpipe $NO_x$ emissions. The major advantage of the present method over the state of the art is that the model used to estimate or calculate the quantity of $NO_x$ released by the adsorber during rich operating conditions is based on a physical model of the release chemistry, not on empirical parameters. Besides a greater accuracy, the benefits of this approach are generic formulae independent of calibration, engine conditions, regeneration air to fuel ratio, etc. The ease of calibration dramatically reduces the calibration time needed for previous methods usually prone to a large number of fluctuations. Another interesting feature of the present method is its independence of the fuel characteristics, underlining its generic character.

As mentioned above, the current abdorber materials are relatively sensitive to sulfur poisoning which degrades the storage capacity of the $NO_x$ adsorber. When the storage capacity drops under a predetermined value, i.e. when the maximum quantity of $NO_x$ stored during lean phase and released during rich pulse reaches an insufficient level, actions must be taken to restore at least part of the initial capacity.

Therefore the present method comprises preferably the following additional step:

5) use of the results of step 2 and/or 3 to update an adaptative capacity model to detect sulfur poisoning of the adsorber and to trigger a desulfation process.

Due to a better monitoring of the adsorber capacity, an improved sulfur contamination diagnostic can be achieved. This not only results in reduced fuel consumption, but decreases also drastically adsorber replacement costs owing to a more efficient regeneration and hence a greater durability.

Another benefit of this better $NO_x$ adsorber capacity usage and diagnostic is a possible downsizing of the adsorber with concomitant cost and space requirement reductions.

In a preferred embodiment of the present method wherein the release model in step 2 is based on following equation:

$$ANO_{2\,released} = \left[1 - \frac{AO_{2\,released}}{FO_{2\,released}}\right].FNO_{2\,released}$$

wherein:

$ANO_{2\,released}$:  actual (calculated) moles of $NO_2$ released from the adsorber during rich pulse regeneration

$AO_{2\,released}$:  measured $O_2$ moles during rich pulse

$$FO_{2\,released} = \left(\frac{mole\ O_2}{mole\ air}\right)_{air} . \int_{rich\ pulse} \left(\frac{\lambda_{TLP}}{\lambda_{EO}} - 1\right) Airflow_{rich\ pulse} .dt$$

$FO_{2\,released}$  represents a fictive mole amount of $O_2$ released assuming that the lambda deviation was caused only by $O_2$

$$FNO_{2\,released} = \frac{4}{3}.\left(\frac{mole\ O_2}{mole\ air}\right)_{air}.\int_{rich\ pulse} \left(\frac{\lambda_{TLP}}{\lambda_{EO}} - 1\right)\left(\frac{1}{1 + \frac{2}{3}\left(\frac{mole\ O_2}{mole\ C}\right)_{stoich}.\lambda_{TLP}}\right) Airflow_{rich\ pulse} .dt$$

$FNO_{2\,released}$ represents a fictive mole amount of $O_2$ released assuming that the lambda deviation was caused only by $NO_2$

$$\left(\frac{mole\ O_2}{mole\ C}\right)_{stoich} :$$

oxygen to carbon ratio at stoichiometric operating conditions

$$\left(\frac{mole\ O_2}{mole\ air}\right)_{air} :$$

molar oxygen to air ratio in ambient air

$$\lambda_{EO} = \frac{\left(\frac{mole\ O_{2\,EO}}{mole\ C_{EO}}\right)}{\left(\frac{mole\ O_2}{mole\ C}\right)_{stoich}} :$$

lambda value upstream of the adsorber (EO, engine out)

$$\lambda_{TLP} = \frac{\left(\dfrac{mole\,O_{2TLP}}{mole\,C_{TLP}}\right)}{\left(\dfrac{mole\,O_2}{mole\,C}\right)_{stoich}} \; :$$

lambda value downstream of the adsorber (TLP, tailpipe)

Airflow$_{rich\,pulse}$ :  airflow during rich pulse.

As stated above, the present method is base on the lambda variation across the adsorber and the release chemistry of the $NO_x$ from said adsorber. The following description will try to support and to illustrate the above formulae.
The reaction which summarizes the $NO_x$ release from a $NO_x$ adsorber using a current technology could be represented as follows:

$$M(NO_3)_2 + CO \rightarrow MCO_3 + 2\,NO_2$$

-  Oxygen balance in the exhaust gas:

   Net $O_2$ moles transferred to the gas = (2 - ½) $O_2$ moles = 1.5 $O_2$ moles
   For each mole $NO_2$ released, 0.75 mole $O_2$ are added to the exhaust gases.

-  Carbon balance in the exhaust gas:

   Net C moles transferred to the gas = -1 C mole
   Thus, for each mole $NO_2$ released, 0.5 mole C are subtracted to the exhaust gases.

To know the impact of $NO_x$ release on lambda deviation across $NO_x$ adsorber during rich regeneration:

$$\text{Lambda engine out} = \lambda_{EO} = \frac{\left(\dfrac{mole\,O_{2\,EO}}{mole\,C_{EO}}\right)}{\left(\dfrac{mole\,O_2}{mole\,C}\right)_{stoich}} \qquad \text{(Eq. a)}$$

$$O_{2\,TLP} = O_{2\,EO} + O_{2\,released}$$

$$C_{TLP} = C_{EO} + C_{stored}$$

From oxygen and carbon balance relations:

$$C_{stored} = 2/3\,O_{2\,released}$$

$$\text{Lambda tailpipe} = \lambda_{TLP} = \frac{\left(\dfrac{mole\,O_{2\,TLP}}{mole\,C_{TLP}}\right)}{\left(\dfrac{mole\,O_2}{mole\,C}\right)_{stoich}} \qquad \text{(Eq. b)}$$

From Eq. a and Eq. b:

$$O_{2\,released} = O_{2\,EO}\cdot((\lambda_{TLP}-\lambda_{EO})/\lambda_{EO})/(1+2/3(O_2/C)_{stoich}\cdot\lambda_{TLP})\cdot dt$$

As 1 $NO_2$ release transfers 0.75 moles of oxygen to the gas, $NO_2$ release is related to lambda deviation as follows:

$$FNO_{2\,released} = \frac{4}{3}\cdot\int O_{2EO}\cdot\left(\frac{\lambda_{TLP}}{\lambda_{EO}}-1\right)\left(\frac{1}{1+\dfrac{2}{3}\left(\dfrac{mole\,O_2}{mole\,C}\right)_{stoich}\lambda_{TLP}}\right)dt$$

$O_2$ flow ($O_{2\,EO}$) can be replaced with

$$Airflow\left(\frac{mole\,O_2}{mole\,C}\right)_{air}:$$

$$FNO_{2\,released} = \frac{4}{3}\cdot\left(\frac{mole\,O_2}{mole\,air}\right)_{air}\cdot\int\left(\frac{\lambda_{TLP}}{\lambda_{EO}}-1\right)\left(\frac{1}{1+\dfrac{2}{3}\left(\dfrac{mole\,O_2}{mole\,C}\right)_{stoich}\lambda_{TLP}}\right)Airflow_{rich\,pulse}\cdot dt$$

$$\text{(Eq. c)}$$

But this formula is not strictly applicable as such , because oxygen is also stored during lean phase on oxygen storing material (OSM) and later released during rich pulse. If lambda deviation was only due to $O_2$ release, the Fictive $O_{2\,release}$ ($FO_{2\,release}$) would be:

$$FO_{2\,released} = \left(\frac{mole\,O_2}{mole\,air}\right)_{air}\left(\frac{\lambda_{TLP}}{\lambda_{EO}}-1\right)Airflow_{rich\,pulse}\cdot dt \quad \text{(Eq. d)}$$

To differentiate actual $NO_2$ contribution from total release:

$$NO_2 \text{ contribution} = 1 - O_2 \text{ contribution} \qquad \text{(Eq. e)}$$

with

$$O_2 \text{ contribution} = O_{2 \text{ released}}/FO_{2 \text{ released}} \qquad \text{(Eq. f)}$$

wherein $FO_{2 \text{ released}} = \text{Sum}(O_{2\text{released}}.dt)$ over the complete rich pulse To calculate Actual $NO_{2 \text{ released}}$:

$$ANO_{2 \text{ released}} = NO_2 \text{ contribution}/FNO_{2 \text{ released}} \qquad \text{(Eq. g)}$$

wherein $FNO_{2 \text{ released}} = \text{Sum}(NO_{2\text{released}}.dt)$ over the complete rich pulse

The final equation is:

$$ANO_{2 \text{ released}} = [1 - (O_{2\text{released}}/FO_{2 \text{ released}})].(FNO_{2 \text{ released}}) \qquad \text{(Eq. h)}$$

A second aspect of the present invention is a system for monitoring the adsorptive capacity of a $NO_x$ adsorber of an internal combustion engine, comprising:

- oxygen detection means upstream and/or downstream of the $NO_x$ adsorber
- means to generate a command to switch the operation of the internal combustion engine from lean to rich and from rich to lean operating conditions
- means to perform the calculation of $NO_x$ released during rich pulse using the output of the oxygen detection means in a release model based on lambda deviation across the adsorber and the release chemistry of $NO_2$ from said adsorber
- optional means to store successive calculation values, and
- means to use at least one of the calculation values to update an adaptative capacity model to determine the duration of the lean phase and/or of the rich pulse.

In practice, such a system used e.g. in an automobile, enables a close control of the performance of the $NO_x$ adsorber without tedious calibration steps, while keeping the fuel consumption due to $NO_x$ reduction as low as possible.

The oxygen detecting means that could be used are generally known in the art and comprise stoichometry sensors for detection of the stoichiometry (also called switching type oxygen sensors) or wide range sensors (such as UEGO Universal Exhaust Gas oxygen Sensor).

The means to generate a command, to perform the calculations, to optionally store any necessary values and to update the adaptive capacity model may be integrated in one dedicated logical unit or even be part of a larger unit of engine diagnostic and control.

In a preferred embodiment of the present invention, the system also controls sulfur poisoning of the adsorber and further comprises

- means to use at least one of the calculation values to update an adaptative capacity model to determine the necessity of a desulfation of the $NO_x$ adsorber due to excessive sulfur poisoning, and
- means to generate a command to trigger a desulfation of the $NO_x$ adsorber.

The model used by the present system may be based on the following equation:

$$ANO_{2\,released} = \left[1 - \frac{AO_{2\,released}}{FO_{2\,released}}\right].FNO_{2\,released}$$

with the above defined meanings.

A specific embodiment of the invention provides a system, wherein

- the oxygen detection means comprise an UEGO type oxygen sensor upstream and a switching type oxygen sensor downstream of the adsorber
- the release model is based on following equation:

$$ANO_2\ released = \frac{4}{3}\left[\frac{1}{1+\frac{2}{3}\left(\dfrac{mole\ O_2}{mole\ C}\right)_{stoich}}\right]\left[\left[\left(\frac{mole\ O_2}{mole\ air}\right)_{air}\int_{rich\ pulse}\left(\frac{1}{\lambda_{EO}}-1\right)Airflow_{rich\ pulse}.dt\right]-AO_2\ release\right]$$

<div align="right">(Eq. i)</div>

with the above defined meanings.

This equation is obtained by replacing the $FO_{2\ released}$ and $FNO_{2\ released}$ in Eq. h by Eq. c and Eq. d, respectively. In this particular case, lambda EO ($\lambda_{EO}$) is measured, whereas lambda TLP ($\lambda_{TLP}$) = 1. This assumption is valid if rich pulse is terminated before a significant rich drift at the tailpipe side occurs.

In a further specific embodiment, there is provided a system wherein

- the oxygen detection means comprise an UEGO type oxygen sensor downstream and a switching type oxygen sensor upstream of the adsorber
- the release model is based on following equation:

$$ANO_2\ released = \frac{4}{5}.k.\left[\left[\left(\frac{mole\ O_2}{mole\ air}\right)_{air}\int_{rich\ pulse}\left(\frac{1}{\lambda_{EO}}-1\right)Airflow_{rich\ pulse}.dt\right]-AO_2\ release\right]$$

<div align="right">(Eq. j)</div>

wherein:

$$k = \frac{\displaystyle\int_{rich\ pulse}\frac{\left(\dfrac{1}{\lambda_{EO}}-1\right)}{\left(1+\dfrac{2}{3}.c.\lambda_{TLP}\right)}.Airflow_{rich\ pulse}.dt}{\displaystyle\int_{rich\ pulse}\left(\dfrac{1}{\lambda_{EO}}-1\right)Airflow_{rich\ pulse}.dt}$$

and

$$c:\quad \left(\frac{mole O_2}{mole C}\right)_{stoich}$$

all other terms having the meanings defined above.

In this embodiment, injecting Eq. c and Eq. d in Eq. h, gives the following theoretical formula:

$$1.5\,ANO_{2\,released} = \frac{4}{5}\left[\left[\left(\frac{mole\,O_2}{mole\,air}\right)_{air} \cdot \int_{r.p.}\frac{\left(\frac{1}{\lambda_{EO}}-1\right)}{\left(1+\frac{2}{3}.c\lambda_{TLP}\right)}.Airflow_{r.p.}.dt\right] - \left[\frac{\int_{r.p.}\frac{\left(\frac{1}{\lambda_{EO}}-1\right)}{\left(1+\frac{2}{3}.c\lambda_{TLP}\right)}.Airflow_{r.p.}.dt}{\int_{rich\,pulse}\left(\frac{1}{\lambda_{EO}}-1\right)Airflow_{r.p.}.dt}\right]ANO_{2\,released}\right]$$

$$\text{(Eq. k)}$$

In practice, this theoretical formula may be simplified to Eq. j with the meanings given above for k and c.

**Claims**

**1.** Method of monitoring the adsorptive capacity of a $NO_x$ adsorber of an internal combustion engine, comprising the following steps:

> 1) identification of $O_2$ moles released from the adsorber during rich pulse regeneration,
> 2) calculation of $NO_2$ moles released during rich pulse regeneration using the value from step 1 in a release model based on lambda deviation across the adsorber and the release chemistry of $NO_2$ from said adsorber
> 3) optional storage of successive results of steps 1 and 2
> 4) use of the results of step 2 and/or 3 to update an adaptative capacity model to control the duration of the lean phase and/or of the rich pulse.

**2.** Method as claimed in claim 1, comprising the following additional step:

> 5) use of the results of step 2 and/or 3 to update an adaptative capacity model to detect sulfur poisoning of the adsorber and to trigger a desulfation process.

**3.** Method as claimed in any one of the preceding claims, wherein the release model in step 2 is based on following equation:

$$ANO_{2\,released} = \left[1 - \frac{AO_{2\,released}}{FO_{2\,released}}\right]FNO_{2\,released}$$

wherein :

$ANO_{2\,released}$:   actual (calculated) moles of $NO_2$ released from the adsorber during rich pulse regeneration
$AO_{2\,released}$:   measured $O_2$ moles during rich pulse

$$FO_{2\,released} = \left(\frac{mole\,O_2}{mole\,air}\right)_{air} \cdot \int_{rich\,pulse}\left(\frac{\lambda_{TLP}}{\lambda_{EO}}-1\right)Airflow_{rich\,pulse}.dt$$

$$FNO_{2\,released} = \frac{4}{3}\left(\frac{mole\,O_2}{mole\,air}\right)_{air} \cdot \int_{rich\,pulse} \left(\frac{\lambda_{TLP}}{\lambda_{EO}}-1\right)\left(\frac{1}{1+\frac{2}{3}\left(\frac{mole\,O_2}{mole\,C}\right)_{stoich}\lambda_{TLP}}\right)Airflow_{rich\,pulse}.dt$$

$$\left(\frac{mole\,O_2}{mole\,C}\right)_{stoich} :$$

oxygen to carbon ratio at stoichiometric operating conditions

$$\left(\frac{mole\,O_2}{mole\,air}\right)_{air} :$$

molar oxygen to air ratio in ambient air

$$\lambda_{EO} = \frac{\left(\frac{mole\,O_{2\,EO}}{mole\,C_{EO}}\right)}{\left(\frac{mole\,O_2}{mole\,C}\right)_{stoich}} :$$

lambda value upstream of the adsorber (EO, engine out)

$$\lambda_{TLP} = \frac{\left(\frac{mole\,O_{2\,TLP}}{mole\,C_{TLP}}\right)}{\left(\frac{mole\,O_2}{mole\,C}\right)_{stoich}} :$$

lambda value downstream of the adsorber (TLP, tailpipe)

$Airflow_{rich\,pulse}$ :     airflow during rich pulse.

**4.** System for monitoring the adsorptive capacity of a $NO_x$ adsorber of an internal combustion engine, comprising:

- oxygen detection means upstream and/or downstream of the $NO_x$ adsorber
- means to generate a command to switch the operation of the internal combustion engine from lean to rich and from rich to lean operating conditions
- means to perform the calculation of $NO_x$ released during rich pulse using the output of the oxygen detection means in a release model based on lambda deviation across the adsorber and the release chemistry of $NO_2$ from said adsorber
- optional means to store successive calculation values, and
- means to use at least one of the calculation values to update an adaptative capacity model to determine the duration of the lean phase and/or of the rich pulse.

**5.** System as claimed in claim 4, further comprising:

- means to use at least one of the calculation values to update an adaptative capacity model to determine the necessity of a desulfation of the $NO_x$ adsorber due to excessive sulfur poisoning, and
- means to generate a command to trigger a desulfation of the $NO_x$ adsorber.

6. System as claimed in any one of claims 4 or 5, wherein the release model is based on following equation:

$$ANO_{2\,released} = \left[1 - \frac{AO_{2\,released}}{FO_{2\,released}}\right].FNO_{2\,released}$$

wherein:

$ANO_{2\,released}$: actual (calculated) moles of $NO_2$ released from the adsorber during rich pulse regeneration

$AO_{2\,released}$: measured $O_2$ moles during rich pulse

$$FO_{2\,released} = \left(\frac{mole\,O_2}{mole\,air}\right)_{air} \cdot \int_{rich\,pulse} \left(\frac{\lambda_{TLP}}{\lambda_{EO}} - 1\right) Airflow_{rich\,pulse}.dt$$

$$FNO_{2\,released} = \frac{4}{3}\left(\frac{mole\,O_2}{mole\,air}\right)_{air} \cdot \int_{rich\,pulse} \left(\frac{\lambda_{TLP}}{\lambda_{EO}} - 1\right)\left(\frac{1}{1 + \frac{2}{3}\left(\frac{mole\,O_2}{mole\,C}\right)_{stoich}\lambda_{TLP}}\right) Airflow_{rich\,pulse}.dt$$

$$\left(\frac{mole\,O_2}{mole\,C}\right)_{stoich} :$$

oxygen to carbon ratio at stoichiometric operating conditions

$$\left(\frac{mole\,O_2}{mole\,air}\right)_{air} :$$

molar oxygen to air ratio in ambient air

$$\lambda_{EO} = \frac{\left(\frac{mole\,O_{2\,EO}}{mole\,C_{EO}}\right)}{\left(\frac{mole\,O_2}{mole\,C}\right)_{stoich}} :$$

lambda value upstream of the adsorber (EO, engine out)

$$\lambda_{TLP} = \frac{\left(\dfrac{mole\,O_{2TLP}}{mole\,C_{TLP}}\right)}{\left(\dfrac{mole\,O_2}{mole\,C}\right)_{stoich}} \ :$$

lambda value downstream of the adsorber (TLP, tailpipe)
Airflow$_{rich\,pulse}$:  airflow during rich pulse.

7.  System as claimed in claim 6, wherein

-   the oxygen detection means comprise an UEGO type oxygen sensor upstream and a switching type oxygen sensor downstream of the adsorber
-   the release model is based on following equation:

$$ANO_2\ released = \frac{4}{3}\left[\frac{1}{1+\frac{2}{3}\left(\dfrac{mole\,O_2}{mole\,C}\right)_{stoich}}\right]\left[\left[\left(\frac{mole\,O_2}{mole\,air}\right)_{air}\int_{rich\,pulse}\left(\frac{1}{\lambda_{EO}}-1\right)Airflow_{rich\,pulse}.dt\right] - AO_2\ release\right]$$

wherein :

ANO$_2$ released :   actual (calculated) moles of NO$_2$ released from the adsorber during rich pulse regeneration

$$\left(\frac{mole\,O_2}{mole\,C}\right)_{stoich} :$$

oxygen to carbon ratio at stoichiometric operating conditions

$$\left(\frac{mole\,O_2}{mole\,air}\right)_{air} :$$

molar oxygen to air ratio in ambient air

$$\lambda_{EO} = \frac{\left(\dfrac{mole\,O_{2EO}}{mole\,C_{EO}}\right)}{\left(\dfrac{mole\,O_2}{mole\,C}\right)_{stoich}} \ :$$

lambda value upstream of the adsorber (EO, engine out)
Airflow$_{rich\,pulse}$:   airflow during rich pulse
AO$_2$ released :   measured O$_2$ moles during rich pulse.

8.  System as claimed in claim 6, wherein

-   the oxygen detection means comprise an UEGO type oxygen sensor downstream and a switching type oxygen sensor upstream of the adsorber

- the release model is based on following equation:

$$ANO_2 \text{ released} = \frac{4}{5} k. \left[ \left[ \left( \frac{\text{mole } O_2}{\text{mole air}} \right)_{air} \int_{\text{rich pulse}} \left( \frac{1}{\lambda_{EO}} - 1 \right) Airflow_{\text{rich pulse}} .dt \right] - AO_2 \text{ release} \right]$$

wherein :

$ANO_2$ released :     actual (calculated) moles of $NO_2$ released from the adsorber during rich pulse regeneration

$$k = \frac{\displaystyle\int_{\text{rich pulse}} \frac{\left( \frac{1}{\lambda_{EO}} - 1 \right)}{\left( 1 + \frac{2}{3} .c.\lambda_{TLP} \right)} . Airflow_{\text{rich pulse}} .dt}{\displaystyle\int_{\text{rich pulse}} \left( \frac{1}{\lambda_{EO}} - 1 \right) Airflow_{\text{rich pulse}} .dt}$$

c : constant

$$\left( \frac{\text{mole } O_2}{\text{mole } C} \right)_{stoich} :$$

oxygen to carbon ratio at stoichiometric operating conditions

$$\left( \frac{\text{mole } O_2}{\text{mole air}} \right)_{air} :$$

molar oxygen to air ratio in ambient air

$$\lambda_{EO} = \frac{\left( \dfrac{\text{mole } O_{2EO}}{\text{mole } C_{EO}} \right)}{\left( \dfrac{\text{mole } O_2}{\text{mole } C} \right)_{stoich}} :$$

lambda value upstream of the adsorber (EO, engine out)

$$\lambda_{TLP} = \frac{\left( \dfrac{\text{mole } O_{2TLP}}{\text{mole } C_{TLP}} \right)}{\left( \dfrac{\text{mole } O_2}{\text{mole } C} \right)_{stoich}} :$$

lambda value downstream of the adsorber (TLP, tailpipe)

$Airflow_{rich\ pulse}$ : airflow during rich pulse

$AO_2\ released$ : measured $O_2$ moles during rich pulse.

**European Patent Office**

**EUROPEAN SEARCH REPORT**

Application Number

EP 02 01 2811

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 771 685 A (HEPBURN JEFFREY SCOTT) 30 June 1998 (1998-06-30) | 1,4 | B01D53/94 F01N3/08 |
| A | * claims 1-7 * | 2,3,5-8 | |
| X | EP 1 083 306 A (MAGNETI MARELLI SPA) 14 March 2001 (2001-03-14) | 1,2,4,5 | |
| A | * claim 1 * | 3,6-8 | |
| A | DE 198 51 564 A (SIEMENS AG) 11 May 2000 (2000-05-11) * claims 1,12 * | 1-8 | |
| A | EP 0 997 626 A (RENAULT) 3 May 2000 (2000-05-03) * page 2, line 52 - page 3, line 16 * | 1-8 | |
| A | EP 0 735 250 A (TOYOTA MOTOR CO LTD) 2 October 1996 (1996-10-02) *le document en entier* | 1-8 | |
| A | DE 198 51 843 A (SIEMENS AG) 11 May 2000 (2000-05-11) *le document en entier* | 1-8 | TECHNICAL FIELDS SEARCHED (Int.Cl.7) B01D F01N |

The present search report has been drawn up for all claims

| Place of search | Date of completion of the search | Examiner |
|---|---|---|
| THE HAGUE | 7 October 2002 | Faria, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 02 01 2811

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2002

| Patent document cited in search report | | Publication date | Patent family member(s) | | Publication date |
|---|---|---|---|---|---|
| US 5771685 | A | 30-06-1998 | DE | 19744579 A1 | 30-04-1998 |
| | | | GB | 2318418 A ,B | 22-04-1998 |
| | | | JP | 10128058 A | 19-05-1998 |
| EP 1083306 | A | 14-03-2001 | IT | BO990478 A1 | 07-03-2001 |
| | | | BR | 0004244 A | 10-04-2001 |
| | | | EP | 1083306 A1 | 14-03-2001 |
| | | | US | 6327848 B1 | 11-12-2001 |
| DE 19851564 | A | 11-05-2000 | DE | 19851564 A1 | 11-05-2000 |
| | | | FR | 2785640 A1 | 12-05-2000 |
| | | | GB | 2344771 A ,B | 21-06-2000 |
| EP 0997626 | A | 03-05-2000 | FR | 2785331 A1 | 05-05-2000 |
| | | | EP | 0997626 A1 | 03-05-2000 |
| EP 0735250 | A | 02-10-1996 | JP | 2827954 B2 | 25-11-1998 |
| | | | JP | 8260949 A | 08-10-1996 |
| | | | EP | 1146208 A2 | 17-10-2001 |
| | | | EP | 0735250 A2 | 02-10-1996 |
| | | | KR | 165951 B1 | 15-01-1999 |
| | | | US | 5713199 A | 03-02-1998 |
| DE 19851843 | A | 11-05-2000 | DE | 19851843 A1 | 11-05-2000 |
| | | | FR | 2785555 A1 | 12-05-2000 |
| | | | GB | 2344772 A ,B | 21-06-2000 |

EPO FORM P0459

For more details about this annex : see Official Journal of the European Patent Office, No. 12/82